# FASCICULE DE BREVET EUROPEEN

(11) **EP 2 232 156 B1**
(45) Date de publication et mention de la délivrance du brevet: **14.03.2018**
(21) Numéro de dépôt: 09704058.8
(22) Date de dépôt: 12.01.2009
(51) Int. Cl.: F24D 17/00, F24D 17/02, F24D 19/10, F25B 49/02, F24H 4/04, F24F 5/00, F24F 12/00, F24F 11/00

(54) **INSTALLATION DE PRODUCTION D'EAU CHAUDE SANITAIRE**
ANLAGE ZUR PRODUKTION VON HYGIENISCHEM WARMWASSER
PLANT FOR PRODUCING SANITARY HOT WATER

(30) Priorité: 15.01.2008 FR 0800205
(43) Date de publication de la demande: 29.09.2010
(73) Titulaire: ALDES AERAULIQUE, 69200 Venissieux Cedex (FR)
(72) Inventeur: LABAUME, Damien, 31570 Preserville (FR); BUSEYNE, Serge, 31200 Toulouse (FR)
(74) Mandataire: Verriest, Philippe
(86) Numéro de dépôt international: PCT/FR2009/050035
(87) Numéro de publication internationale: WO 2009/092951

(56) Documents cités:
- EP-A- 0 908 687
- EP-A- 1 489 369
- EP-A- 1 847 783
- WO-A-2005/047781
- DE-A1- 10 058 273
- FR-A1- 2 356 098
- JP-A- 2003 139 419
- US-A- 5 050 394
- US-A- 5 095 715
- US-A- 5 810 245
- US-A1- 2005 086 959

## Description

L'invention concerne une installation de production d'eau chaude sanitaire.

Une installation de production d'eau chaude sanitaire est destinée à équiper notamment un logement individuel ou des logements collectifs.

Compte tenu des contraintes environnementales et du coût important de l'énergie, il est nécessaire de réduire la consommation des différentes installations équipant une habitation. Les besoins de l'installation de chauffage de l'habitation ont été considérablement réduits, en particulier par l'utilisation de nouveaux matériaux d'isolation, la pose de vitrages adaptés, et la diminution des ponts thermiques lors de la construction du bâtiment.

De même, les besoins d'une installation destinée à la ventilation de l'habitation sont considérablement réduits en utilisant une ventilation double flux, permettant de récupérer des calories sur le flux d'air extrait pour les transférer au flux d'air insufflé ou en utilisant une ventilation modulée, dont le fonctionnement est limité aux besoins réels et fonction, par exemple, du taux d'hygrométrie à l'intérieur de l'habitation.

On constate actuellement que, dans les maisons de type « basse consommation », l'installation destinée à la production d'eau chaude sanitaire est celle consommant le plus d'énergie.

Il apparaît donc nécessaire de réduire les besoins en énergie de ce type d'installation.

Dans ce but, il est connu d'utiliser une installation de production d'eau chaude sanitaire comportant un chauffe-eau comprenant un réservoir à l'intérieur duquel est stocké un fluide à chauffer, ainsi qu'un système de ventilation mécanique contrôlée destiné à extraire de l'air d'une habitation, le système de ventilation mécanique contrôlée étant couplé à un circuit thermodynamique à l'intérieur duquel circule un fluide frigorigène, le circuit thermodynamique comportant un évaporateur agencé pour échanger de la chaleur avec l'air extrait, un compresseur, un détendeur, et un condenseur agencé pour échanger de la chaleur avec le fluide contenu dans le réservoir.

Une telle installation est généralement désignée par le terme « chauffe-eau thermodynamique sur l'air extrait».

Une installation de ce type permet de récupérer une partie de la chaleur de l'air extrait et de la transférer au fluide contenu dans le réservoir du chauffe-eau, par l'intermédiaire du circuit thermodynamique et des échangeurs de chaleur formés par l'évaporateur et le condenseur.

Ce type d'installation nécessite un débit d'air sensiblement constant et important afin de chauffer l'eau du réservoir. En effet, dans le cas où le débit d'air est réduit, les performances de l'installation se dégradent et les risques de givrage dans l'air extrait apparaissent.

Dans ce cas, soit l'installation est arrêtée de manière automatique et se met en mode dit de sécurité, soit l'apparition de phénomènes de givrage risque d'endommager l'installation, en particulier le système de ventilation.

Par conséquent, le système de ventilation utilisé pour ce type d'installation est nécessairement un système à débit constant, la valeur de débit devant être d'une valeur suffisante pour assurer le fonctionnement de l'installation. Un tel débit d'air extrait engendre des pertes importantes de chaleur pour l'habitation.

Un autre inconvénient de ce type d'installation est de fonctionner uniquement en marche ou en arrêt, l'hystéris de fonctionnement étant piloté par l'intermédiaire d'un capteur de température agencé pour mesurer la température de l'eau chaude sanitaire distribuée. Ainsi, lorsque la température de l'eau chaude sanitaire est inférieure à une valeur basse prédéterminée, le compresseur est démarré de sorte que l'eau contenue dans le réservoir est chauffée. Lorsque la température de l'eau dépasse une valeur haute prédéterminée, le compresseur est arrêté.

Un tel fonctionnement engendre une consommation non optimisée d'énergie par le compresseur.

Le document US 5 050 394 décrit une installation d'air conditionné pour l'équipement d'un local, dont la machine thermodynamique est équipée d'un compresseur à vitesse variable et est associée à une installation de production d'eau chaude sanitaire. Une installation de production d'eau chaude sanitaire selon le préambule de la revendication 1 est connue du document DE 100 58 273 A1. L'invention vise à remédier à ces inconvénients en proposant une installation de production d'eau chaude sanitaire optimisant la récupération d'énergie thermique disponible dans l'air extrait, tout en limitant la consommation d'énergie requise pour le fonctionnement de l'installation.

A cet effet, l'invention concerne une installation de production d'eau chaude sanitaire du premier type précité, caractérisée en ce que le système de ventilation est équipé de moyens de réglage du débit d'air extrait, par exemple en fonction de l'hygrométrie, en ce que le compresseur est un compresseur à vitesse variable, apte à modifier le débit de fluide frigorigène, en ce qu'elle comporte des moyens fournissant une information sur le débit d'air extrait, coopérant avec le compresseur de manière à ajuster le débit de fluide frigorigène dans le circuit correspondant en fonction du débit d'air mesuré et en ce qu'elle comporte au moins une sonde de température de l'air extrait, diposée en aval de l'évaporateur dans le sens de circulation de l'air, et coopérant avec le compresseur de manière à ajuster le débit de fluide frigorigène dans le circuit correspondant en fonction de la température de l'air mesurée.

De cette manière, le débit d'air extrait peut être modulé ou ajusté en fonction des besoins de ventilation du bâtiment.

En outre, l'utilisation d'un compresseur à vitesse variable, généralement appelé compresseur de type « inverter » permet d'ajuster le débit de fluide frigorigène en fonction de la chaleur disponible ou pouvant être puisée dans l'air extrait, de manière à garantir le bon fonctionnement de l'installation. C'est ainsi que, par exemple, une réduction du débit d'air extrait est suivie d'une diminution de la vitesse du compresseur et donc d'une diminution de la quantité de chaleur prélevée à l'air extrait, de façon à éviter tout phénomène de givrage.

En outre, l'ajustement de la vitesse du compresseur permet de pouvoir le faire fonctionner à faible vitesse lorsque cela est possible, de sorte que la consommation d'énergie liée au fonctionnement du compresseur soit considérablement réduite.

La mesure de débit d'air fournit une information directe sur la quantité d'énergie disponible pouvant être puisée dans l'air extrait puis transférée au fluide contenu dans le résevoir du chauffe-eau.

La mesure de la température de l'air extrait fournit une information indirecte sur la quantité d'énergie disponible et pouvant être puisée. En effet, la température de l'air extrait, en aval de l'évaporateur, est d'autant plus réduite que l'énergie restante contenue dans l'air extrait est faible.

Selon une autre possibilité de l'invention, la sonde de température pourraît être disposée en amont de l'évaporateur.

Selon une possibilité de l'invention, l'invention comporte au moins une sonde de température, apte à mesurer la température du fluide contenu dans le réservoir du chauffe-eau, coopérant avec le compresseur de manière à ajuster le débit de fluide frigorigène dans le circuit correspondant, en fonction de la température de fluide mesurée.

La mesure de la température du fluide dans le réservoir permet d'obtenir une information sur l'état du stock d'eau chaude sanitaire et permet d'optimiser le temps ainsi que la vitesse de fonctionnement du compresseur.

Préférentiellement, l'installation comporte une pluralité de sondes de température, disposées à des niveaux différents du réservoir, de manière à mesurer la température d'une pluralité de strates du fluide contenu dans le reservoir.

Selon une caractéristique de l'invention, les moyens de mesure du débit d'air extrait, la sonde de température de l'air extrait et/ou la sonde de température du fluide sont reliés à une unité de commande centrale conçue pour ajuster la vitesse du compresseur en fonction du débit d'air mesuré, de la température de l'air mesurée et/ou de la température de fluide mesurée.

Selon une variante de réalisation, le condenseur est disposé à l'intérieur du réservoir du chauffe-eau, de manière à échanger directement de la chaleur avec le fluide contenu dans le réservoir.

Selon une autre variante de réalisation, l'installation comporte un circuit secondaire d'échange de chaleur à l'intérieur duquel circule un fluide caloporteur, traversant le condenseur de manière à échanger de la chaleur avec le fluide caloporteur, le circuit secondaire comportant en outre un échangeur de chaleur disposé à l'intérieur du réservoir du chauffe-eau, de manière à échanger de la chaleur avec le fluide contenu dans le réservoir.

Préférentiellement, l'échangeur de chaleur du circuit secondaire est un serpentin.

Selon une caractéristique de l'invention, le système de ventilation mécanique contrôlée comporte au moins une bouche de ventilation destinée au passage de l'air extrait, les moyens de réglage du débit d'air extrait comportant des moyens de réglage de l'ouverture de la bouche de ventilation.

Ainsi, lorsqu'il est nécessaire de disposer d'un débit d'air extrait important, la bouche de ventilation peut être ouverte au maximum. Ceci est notamment le cas lors des phases de fonctionnement du compresseur du circuit thermodynamique, afin de maximiser les échanges de chaleur entre l'air extrait et le fluide à chauffer contenu dans le réservoir.

Avantageusement, le système de ventilation mécanique contrôlée comporte au moins une première bouche de ventilation destinée au passage de l'air extrait, les moyens de réglage du débit d'air extrait comportant au moins une seconde bouche de ventilation et des moyens de commande conçus pour commander l'ouverture et la fermeture de la seconde bouche de ventilation.

La seconde bouche de ventilation joue un rôle similaire à celui décrit précédemment. En effet, lorsque l'on souhaite augmenter le débit d'air extrait, il suffit d'ouvrir la seconde bouche de ventilation. Afin d'améliorer le confort des habitants, il peut également être utile d'augmenter le débit d'air extrait en période estivale, de manière à surventiler une pièce d'une habitation, en particulier la nuit.

A l'inverse, si une surventilation doit être évitée, la fermeture de la seconde bouche permet de réduire le débit d'air extrait.

La seconde bouche peut être disposée au niveau d'une source de chaleur, par exemple à l'arrière d'un réfrégirateur, de manière à augmenter les performances de l'installation de production d'eau chaude sanitaire.

La seconde bouche peut également être disposée dans une pièce de vie afin de surventiler ladite pièce en période estivale et pendant la nuit, de manière à améliorer le confort pour les habitants.

De toute façon, l'invention sera bien comprise à l'aide de la description qui suit, en référence au dessin schématique annexé représentant, à titre d'exemples non limitatifs, deux formes d'exécution de cette installation de production d'eau chaude sanitaire.
Figure 1 est une vue schématique d'une première forme de réalisation de l'invention ;
Figure 2 est une vue correspondant à la figure 1, d'une seconde forme de réalisation de l'invention ;
Figure 3 est un diagramme représentant, pour un premier mode de fonctionnement, la puissance fournie par le compresseur de l'installation en fonction du temps, par comparaison avec une installation de l'état de la technique ;
Figure 4 est un diagramme représentant, pour le premier mode de fonctionnement, la consommation cumulée du compresseur en fonction du temps ;
Figure 5 et 6 sont des diagrammes correspondants à ceux des figures 3 et 4, pour un second mode de fonctionnement de l'installation.

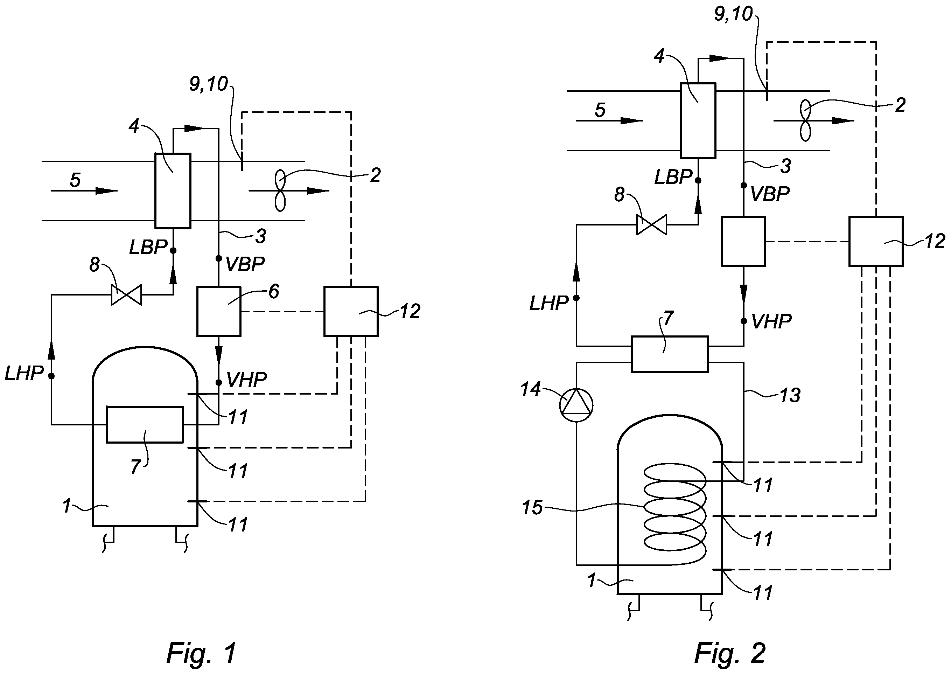

La figure 1 représente une première forme de réalisation d'une installation de production d'eau chaude sanitaire selon l'invention.

Celle-ci comporte un chauffe-eau comprenant un réservoir 1 à l'intérieur duquel est stocké un fluide à chauffer, ainsi qu'un système de ventilation mécanique contrôlée 2 destiné à extraire de l'air d'une habitation.

Le système de ventilation mécanique contrôlée 2 est équipé de moyens de réglage du débit d'air extrait, par exemple en fonction de l'hygrométrie, et est couplé à un circuit thermodynamique 3 à l'intérieur duquel circule un fluide frigorigène.

Le circuit thermodynamique 3 comporte successivement, dans le sens de circulation de fluide frigorigène, un évaporateur 4 agencé pour échanger de la chaleur avec l'air extrait 5, un compresseur 6, un condenseur 7 agencé pour échanger de la chaleur avec le fluide contenu dans le réservoir 1, et un détendeur 8. Le sens de circulation du fluide frigorigène est représenté par des flèches. En outre, la phase et la pression du fluide frigorigène sont identifiés par les références VBP (Vapeur Basse Pression), VHP (Vapeur Haute Pression), LHP (Liquide Haute Pression) et LBP (Liquide Basse Pression).

Plus particulièrement, le compresseur 6 est un compresseur à vitesse variable, apte à modifier le débit de fluide frigorigène. En outre, le condenseur 7 est disposé à l'intérieur du réservoir 1 du chauffe-eau, de manière à échanger directement de la chaleur avec le fluide contenu dans le réservoir 1.

L'installation comporte en outre des moyens 9 de mesure du débit d'air extrait, une sonde 10 de température de l'air extrait, diposée en aval de l'évaporateur 4 dans le sens de circulation de l'air, et une pluralité de sondes de température 11, disposées à des niveaux différents du réservoir 1 et aptes à mesurer la température d'une pluralité de strates du fluide contenu dans le reservoir 1.

Les moyens 9 de mesure du débit d'air, la sonde 10 de température de l'air et/ou les sondes 11 de température du fluide sont reliés à une unité de commande centrale 12 conçue pour ajuster la vitesse du compresseur 6 en fonction du débit d'air mesuré, de la température de l'air mesurée et/ou de la température de fluide mesurée.

Dans une seconde forme de réalisation représentée à la figure 2, le condenseur 7 est disposé à l'extérieur du réservoir. L'installation comporte en outre un circuit secondaire 13 d'échange de chaleur, équipé d'une pompe 14 et à l'intérieur duquel circule un fluide caloporteur. Le circuit secondaire 13 traverse le condenseur 7 de manière à échanger de la chaleur avec le fluide caloporteur. Le circuit secondaire 13 comporte en outre un échangeur de chaleur 15 se présentant sous la forme d'un serpentin, disposé à l'intérieur du réservoir 1 du chauffe-eau, de manière à échanger de la chaleur avec le fluide contenu dans le réservoir 1.

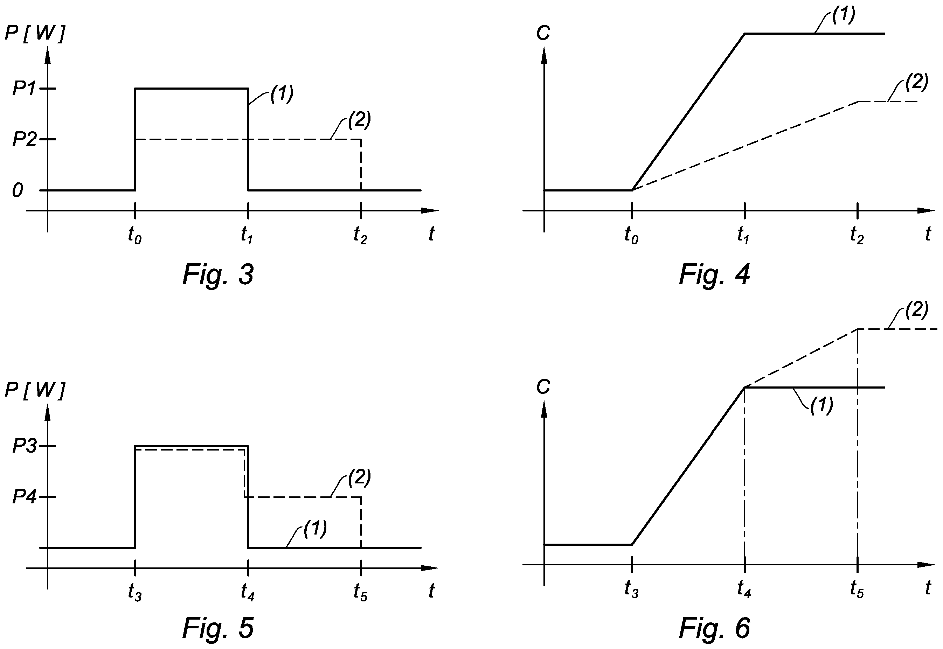

La figure 3 un diagramme comporte une première courbe, référencée (1), représentant le fonctionnement d'une installation de type chauffe-eau thermodynamique classique, et une seconde courbe, référencée (2), représentant le fonctionnement de l'installation selon l'invention.

Cette figure représente le fonctionnement des installations précitées pour un débit d'air extrait constant, de valeur Q1.

Dans le cas de l'installation classique (courbe 1), le compresseur est démarré dans l'intervalle de temps compris entre t0 et t1, la puissance fournie du compresseur à vitesse fixe de cette installation étant égale à P1.

Dans le cas de l'installation selon l'invention (courbe 2), il est possible de faire fonctionner le compresseur 6 à une vitesse plus réduite, pendant une période de temps (entre t0 et t2) plus longue, avec un meilleur rendement.

La puissance P2 fournie par le compresseur à vitesse variable 6 est alors réduite.

De ce fait, comme cela ressort de la figure 3, la consommation cumulée C du compresseur à vitesse variable (courbe 2) est réduite, par comparaison avec la consommation cumulée du compresseur à vitesse fixe (courbe 1) équipant l'installation de l'art antérieur.

La figure 5 représente un autre mode de fonctionnement dans lequel le débit Q1 d'air extrait pendant l'intervalle de temps t3 à t4 est réduit et égal à Q2 pendant l'intervalle de temps t4 à t5. Ce mode de fonctionnement est celui d'un système de ventilation modulée, dans lequel le débit d'air extrait est ajusté en fonction des besoins.

Dans le cas d'une installation classique (courbe 1), l'installation fonctionne durant l'intervalle de temps t3-t4, lorsque le débit d'air extrait est maximal. Lorsque le débit d'air extrait chute, dans l'intervalle de temps t4-t5, l'installation doit être arrêtée afin de ne pas générer du givre dans l'air extrait. Par conséquent, comme représenté à la figure 5, le compresseur est arrêté et l'eau contenue dans le réservoir ne peut être chauffée durant cette période.

Au contraire, dans le cas d'une installation selon l'invention (courbe 2), le compresseur 6 peut par exemple fonctionner à pleine vitesse durant l'intervalle de temps t3-t4, puis à vitesse réduite durant l'intervalle de temps t4-t5, de manière à éviter les problème dus au givrage. Le rendement de l'installation est donc augmenté. En outre, la consommation du compresseur 6 fonctionnant à vitesse réduite est également diminuée.

On remarque ainsi que l'installation selon l'invention est apte à fonctionner en association avec un système de ventilation modulée 3. On rappelle qu'un tel système permet de limiter les déperditions thermiques dues à l'extraction d'air chaud, ces déperditions étant en outre limitées par le fait que l'installation selon l'invention permet de récupérer une partie de la chaleur de l'air extrait, et ce quel que soit le débit d'air extrait.

Il apparaît ainsi que l'invention permet d'optimiser la récupération d'énergie thermique disponible dans l'air extrait.

Selon une forme de réalisation, le système de ventilation mécanique contrôlée comporte une ou plusieurs bouches de ventilation destinées au passage de l'air extrait, des moyens de réglage permettant d'ajuster l'ouverture desdites bouches de ventilation.

Selon une autre forme de réalisation, le système de ventilation mécanique contrôlée comporte au moins une première bouche de ventilation, destinée au passage de l'air extrait en fonctionnement normal, ainsi qu'au moins une seconde bouche de ventilation. Des moyens de commande conçus pour commander l'ouverture et la fermeture de la seconde bouche de ventilation permettent de passer d'un état de fonctionnement normal dans lequel l'air extrait passe uniquement au travers de la première bouche à un état dit de surventilation dans lequel l'air est extrait à la fois au travers de la première et de la seconde bouches de ventilation.

Il est ainsi possible de faire varier le débit d'air extrait en fonction notamment du cycle de fonctionnement du circuit thermodynamique et des conditions thermodynamiques, afin d'améliorer les performances de l'installation de production d'eau chaude sanitaire. C'est ainsi que, afin de d'optimiser les échanges de chaleur entre l'air extrait et le fluide à chauffer, il est utile de disposer d'un débit d'air extrait plus important. Comme il va de soi l'invention ne se limite pas aux formes de réalisations de cette installation, décrites ci-dessus à titre d'exemples, mais elle embrasse au contraire toutes les variantes.

## Revendications

1. Installation de production d'eau chaude sanitaire comportant un chauffe-eau comprenant un réservoir (1) à l'intérieur duquel est stocké un fluide à chauffer, un système de ventilation mécanique contrôlée (2), destiné à extraire de l'air (5) d'une habitation, et équipé de moyens de réglage du débit d'air extrait, par exemple en fonction de l'hygrométrie, ainsi qu'un circuit thermodynamique, le système de ventilation mécanique contrôlée (2) étant couplé au circuit thermodynamique (3) à l'intérieur duquel circule un fluide frigorigène, le circuit thermodynamique (3) comportant un évaporateur (4) agencé pour échanger de la chaleur avec l'air extrait, un compresseur (6), un détendeur (8), et un condenseur (7) agencé pour échanger de la chaleur avec le fluide contenu dans le réservoir (1), **caractérisée en ce que** le compresseur (6) est un compresseur à vitesse variable, apte à modifier le débit de fluide frigorigène, **en ce qu'**elle comporte des moyens (9) fournissant une information sur le débit d'air extrait (5), coopérant avec le compresseur (6) de manière à ajuster le débit de fluide frigorigène dans le circuit correspondant (3) en fonction du débit d'air mesuré, et **en ce qu'**elle comporte au moins une sonde (10) de température de l'air extrait (5), diposée en aval de l'évaporateur (4) dans le sens de circulation de l'air, et coopérant avec le compresseur (6) de manière à ajuster le débit de fluide frigorigène dans le circuit correspondant (3) en fonction de la température de l'air mesurée.

2. Installation selon la revendication 1, **caractérisée en ce qu'**elle comporte au moins une sonde de température (11), apte à mesurer la température du fluide contenu dans le réservoir (1) du chauffe-eau, coopérant avec le compresseur (6) de manière à ajuster le débit de fluide frigorigène dans le circuit correspondant (3), en fonction de la température de fluide mesurée.

3. Installation selon la revendication 2, **caractérisée en ce qu'**elle comporte une pluralité de sondes de température (11), disposées à des niveaux différents du réservoir (1), de manière à mesurer la température d'une pluralité de strates du fluide contenu dans le reservoir (1).

4. Installation selon l'une des revendications 1 à 3, **caractérisée en ce que** les moyens (9) de mesure du débit d'air extrait (5), la sonde (10) de température de l'air extrait (5) et/ou la sonde (11) de température du fluide sont reliés à une unité de commande centrale (12) conçue pour ajuster la vitesse du compresseur (6) en fonction du débit d'air mesuré, de la température de l'air mesurée et/ou de la température de fluide mesurée.

5. Installation selon l'une des revendications 1 à 4, **caractérisée en ce que** le condenseur (7) est disposé à l'intérieur du réservoir (1) du chauffe-eau, de manière à échanger directement de la chaleur avec le fluide contenu dans le réservoir (1).

6. Installation selon l'une des revendications 1 à 4, **caractérisée en ce qu'**elle comporte un circuit secondaire (13) d'échange de chaleur à l'intérieur duquel circule un fluide caloporteur, traversant le condenseur (7) de manière à échanger de la chaleur avec le fluide caloporteur, le circuit secondaire (13) comportant en outre un échangeur de chaleur (15) disposé à l'intérieur du réservoir (1) du chauffe-eau, de manière à échanger de la chaleur avec le fluide contenu dans le réservoir (1).

7. Installation selon la revendication 6, **caractérisée en ce que** l'échangeur de chaleur du circuit secondaire (13) est un serpentin (15).

8. Installation selon l'une des revendications 1 à 7, **caractérisée en ce que** le système de ventilation mécanique contrôlée comporte au moins une bouche de ventilation destinée au passage de l'air extrait, les moyens de réglage du débit d'air extrait comportant des moyens de réglage de l'ouverture de la bouche de ventilation.

9. Installation selon l'une des revendications 1 à 8, **caractérisée en ce que** le système de ventilation mécanique contrôlée comporte au moins une première bouche de ventilation destinée au passage de l'air extrait, les moyens de réglage du débit d'air extrait comportant au moins une seconde bouche de ventilation et des moyens de commande conçus pour commander l'ouverture et la fermeture de la seconde bouche de ventilation.

## Patentansprüche

1. Anlage zur Erzeugung von warmem Brauchwasser, umfassend einen Warmwasserbereiter, der einen Behälter (1) umfasst, in dessen Inneren ein zu erwärmendes Fluid gespeichert wird, ein gesteuertes mechanisches Lüftungssystem (2), das dazu dient, Luft (5) aus einem Wohnraum abzuziehen und das mit Mitteln zum Regeln der Luftabzugsrate, zum Beispiel abhängig von der Luftfeuchtigkeit, sowie einem thermodynamischen Kreislauf ausgestattet ist, wobei das gesteuerte mechanische Lüftungssystem (2) mit dem thermodynamischen Kreislauf (3) gekoppelt ist, in dessen Inneren ein Kältemittel zirkuliert, wobei der thermodynamische Kreislauf (3) einen Verdampfer (4) umfasst, der dafür eingerichtet ist, Wärme mit der abgezogenen Luft zu tauschen, einen Verdichter (6), einen Druckminderer (8), und einen Kondensator (7), der dafür eingerichtet ist, Wärme mit dem im Behälter (1) enthaltenen Fluid zu tauschen, **dadurch gekennzeichnet, dass** der Verdichter (6) ein Verdichter mit variabler Geschwindigkeit ist, der dazu in der Lage ist, die Kältemittelrate zu verändern, und dadurch, dass sie Mittel (9) umfasst, die eine Information bezüglich der Luftabzugsrate (5) liefern, die mit dem Verdichter (6) zusammenwirken, um die Kältemittelrate im entsprechenden Kreislauf (3) abhängig von der gemessenen Luftrate anzupassen, und dadurch, dass die mindestens einen Temperaturfühler (10) für die abgezogene Luft (5) umfasst, der in der Zirkulationsrichtung der Luft stromabwärts des Verdampfers (4) angeordnet ist und mit dem Verdichter (6) zusammenwirkt, um die Kältemittelrate im entsprechenden Kreislauf (3) abhängig von der gemessenen Temperatur der Luft anzupassen.

2. Anlage nach Anspruch 1, **dadurch gekennzeichnet, dass** sie mindestens einen Temperaturfühler (11) umfasst, der in der Lage ist, die Temperatur des im Behälter (1) des Warmwasserbereiters enthaltenen Fluids zu messen, der mit dem Verdichter (6) zusammenwirkt, um die Kältemittelrate im entsprechenden Kreislauf (3) abhängig von der gemessenen Fluidtemperatur anzupassen.

3. Anlage nach Anspruch 2, **dadurch gekennzeichnet, dass** sie eine Vielzahl von Temperaturfühlern (11) umfasst, die auf verschiedenen Ebenen des Behälters (1) angeordnet sind, um die Temperatur einer Vielzahl von Schichten des im Behälter (1) enthaltenen Fluids zu messen.

4. Anlage nach einem der Ansprüche 1 bis 3, **dadurch gekennzeichnet, dass** die Mittel (9) zum Messen der Luftabzugsrate (5), der Temperaturfühler (10) für die abgezogene Luft (5) und/oder der Temperaturfühler (11) für das Fluid mit einer zentralen Steuereinheit (12) verbunden sind, die dafür konzipiert ist, die Geschwindigkeit des Verdichters (6) abhängig von der gemessenen Luftrate, der gemessenen Temperatur der Luft und/oder der gemessenen Fluidtemperatur anzupassen.

5. Anlage nach einem der Ansprüche 1 bis 4, **dadurch gekennzeichnet, dass** der Kondensator (7) im Inneren des Behälters (1) des Warmwasserbereiters angeordnet ist, um Wärme direkt mit dem im Behälter (1) enthaltenen Fluid zu tauschen.

6. Anlage nach einem der Ansprüche 1 bis 4, **dadurch gekennzeichnet, dass** sie einen sekundären Wärmetauscherkreislauf (13) umfasst, in dessen Inneren ein Wärmeträger zirkuliert, der den Kondensator (7) durchquert, um Wärme mit dem Wärmeträger zu tauschen, wobei der sekundäre Kreislauf (13) weiter einen Wärmetauscher (15) umfasst, der im Inneren des Behälters (1) des Warmwasserbereiters angeordnet ist, um Wärme mit dem im Behälter (1) enthaltenen Fluid zu tauschen.

7. Anlage nach Anspruch 6, **dadurch gekennzeichnet, dass** der Wärmetauscher des sekundären Kreislaufs (13) eine Schlange (15) ist.

8. Anlage nach einem der Ansprüche 1 bis 7, **dadurch gekennzeichnet, dass** das gesteuerte mechanische Lüftungssystem mindestens eine Lüftungsklappe umfasst, die dem Durchlass der abgezogenen Luft dient, wobei die Mittel zum Regeln der Luftabzugsrate Mittel zum Regeln der Öffnung der Lüftungsklappe umfassen.

9. Anlage nach einem der Ansprüche 1 bis 8, **dadurch gekennzeichnet, dass** das gesteuerte mechanische Lüftungssystem mindestens eine erste Lüftungsklappe umfasst, die dem Durchlass der abgezogenen Luft dient, wobei die Mittel zum Regeln der Luftabzugsrate mindestens eine zweite Lüftungsklappe und Steuermittel umfassen, die dazu konzipiert sind, das Öffnen und das Schließen der zweiten Lüftungsklappe zu steuern.

## Claims

1. Plant for producing sanitary hot water including a water heater comprising a tank (1) within which is stored fluid to be heated, a controlled mechanical ventilation system (2) intended for extracting air (5) from a dwelling, and equipped with means for adjusting the extracted airflow, for example based on the hygrometry, and a thermodynamic circuit, the controlled mechanical ventilation system (2) being coupled to the thermodynamic circuit (3) within which flows a coolant fluid, the thermodynamic circuit (3) including an evaporator (4) for exchanging heat with the extracted air, a compressor (6), an expander (8), and a condenser (7) for exchanging heat with fluid contained in the tank (1), **characterised in that** the compressor (6) is a variable speed compressor, capable of modifying the flow of coolant fluid, and **in that** it includes means (9) providing information on the extracted airflow (5) interacting with the compressor (6) so as to adjust the flow of coolant fluid in the corresponding circuit (3) based on the measured airflow, and **in that** it includes at least one temperature probe (10) of the extracted air (5), located downstream of the evaporator (4) in the direction of the airflow, and interacting with the compressor (6) so as to adjust the flow of coolant fluid in the corresponding circuit (3) based on the temperature of the measured air.

2. Plant according to one of Claims 1, **characterised in that** it includes at least one temperature probe (11), capable of measuring the temperature of the fluid contained in the tank (1) of the water heater, interacting with the compressor (6) so as to adjust the flow of the coolant fluid in the corresponding circuit (3), based on the temperature of the measured fluid.

3. Plant according to Claim 2, **characterised in that** it includes a plurality of temperature probes (11) located at different levels of the tank (1) so as to measure the temperature of a plurality of layers of the fluid contained in tank (1).

4. Plant according to one of Claims 1 to 3, **characterised in that** the means (9) for measuring the extracted airflow (5), the temperature probe (10) of the extracted air (5) and/or the temperature probe (11) of the fluid are connected to a central control unit (12) designed to adjust the speed of the compressor (6) based on the measured airflow, the temperature of the measured air and/or the temperature of the measured fluid.

5. Plant according to one of Claims 1 to 4, **characterised in that** the condenser (7) is located inside the tank (1) of the water heater, so as to exchange heat directly with the fluid contained in the tank (1).

6. Plant according to one of Claims 1 to 4, **characterised in that** it includes a secondary circuit (13) of heat exchange inside of which flows a coolant fluid, passing through the condenser (7) so as to exchange heat with the coolant fluid, the secondary circuit (13) further including a heat exchanger (15) located inside the tank (1) of the water heater, so as to exchange heat with the fluid contained in the tank (1).

7. Plant according to Claim 6, **characterised in that** the heat exchanger of the secondary circuit (13) is a coil (15).

8. Plant according to one of Claims 1 to 7, **characterised in that** the controlled mechanical ventilation system includes at least an air vent intended for the passage of extracted air, the means for adjusting the extracted airflow including means for adjusting the opening of the air vent.

9. Plant according to one of Claims 1 to 8, **characterised in that** the controlled mechanical ventilation system includes at least one first air vent intended for the passage of extracted air, means for adjusting the extracted airflow including at least a second air vent and control means designed to control the opening and the closing of the second air vent.
